# EUROPEAN PATENT APPLICATION

(11) **EP 1 975 653 A1**
(43) Date of publication of application: **01.10.2008**
(21) Application number: 08005422.4
(22) Date of filing: 22.03.2008
(51) Int. Cl.: G02B 6/00

(54) **Backlight assembly, display apparatus having the same and method for manufacturing the same**

(30) Priority: 27.03.2007 KR 20070029599
(71) Applicant: Samsung Electronics Co., Ltd., Suwon-si, Gyeonggi-do 442-742 (KR)
(72) Inventor: Kang, Seok-Won, Gwangju-si Gyeonggi-do (KR); Kim, Jeom-Oh, Buan-eub Buan-gun Jeonlabuk-do (KR); Kang, Eun-Jeong, Cheonan-si Chungcheongnam-do (KR)
(74) Representative: Dr. Weitzel & Partner

(57) **Abstract**

A backlight assembly, a display apparatus and a method for manufacturing the backlight assembly. The backlight assembly includes a light-guide plate (200), a point light source unit (310), a fixing plate (400) and a cover (500). The point light source unit (310) includes at least one point light source disposed at a side of the light-guide plate (200), and a flexible printed circuit board (FPC) (320) disposed under the light-guide plate (200) and having the point light source (310). The fixing plate (400) is disposed under the FPC (320) and has at least one first combining member (450). The cover (500) is disposed under the fixing plate (400) and has a first surface on which at least one second combining member (550) is formed. The first (450) and second (550) combining members are combined with each other. Thus, assembling time may be decreased, heat may be efficiently dissipated, and manufacturing costs may be decreased.

## Description

### BACKGROUND OF THE INVENTION

### 1. Technical Field

The present invention relates to a backlight assembly, and, more particularly, to a backlight assembly used for a display apparatus, a display apparatus having the backlight assembly and a method for manufacturing the backlight assembly.

### 2. Discussion of the Related Art

A portable electronic device, such as a laptop computer, a mobile communication terminal, or a digital camera, may include a display apparatus for displaying an image. A flat display apparatus having a small size and a light weight is often used, and particularly, a liquid crystal display (LCD) apparatus displaying the image has been used.

The LCD apparatus may include an LCD panel that does not emit light by itself. An LCD apparatus may include a backlight assembly that provides the light to the LCD panel. Particularly, the backlight assembly used for a compact product such as the laptop computer may include a light-emitting diode (LED) having a small size as a light source.

The backlight assembly can include a light source such as the LED, a light-guide plate guiding the light exiting from the light source to the LCD panel, and a flexible printed circuit board ("FPC") driving the light source. The FPC is fixed on a fixing plate and is combined with an external cover. The fixing plate and the external cover can be combined with each other using adhesive tape.

When the fixing plate and the external cover are combined with each other using the adhesive tape, the backlight assembly is difficult to separate. As a result, repairs may be difficult or impossible, and the reliability of an assembly process may be decreased. Also, heat dissipation may be decreased.

### SUMMARY OF THE INVENTION

Embodiments of the present invention provide a backlight assembly capable of enhancing the reliability of an assembly process and increasing heat dissipation, a display apparatus having the backlight assembly, and a method for manufacturing the backlight assembly.

A backlight assembly, according to an embodiment of the present invention, includes a light-guide plate, a point light source unit, a fixing plate and a cover. The point light source unit includes at least one point light source disposed at a side of the light-guide plate to emit light, and a flexible printed circuit board (FPC) disposed under the light-guide plate and having the point light source mounted on the FPC. The fixing plate is disposed under the FPC and has at least one first combining member. The cover is disposed under the fixing plate and has a first surface on which at least one second combining member is formed. The second combining member is combined with the first combining member.

The fixing plate may have a plurality of the first combining members spaced apart from each other. The cover may have the first surface on which a plurality of the second combining members is formed. The second combining members are respectively combined with the first combining members.

The first combining members may be protrusions when the corresponding second combining members are holes, and the first combining members may be holes when the corresponding second combining members are protrusions. The protrusions may be respectively inserted into the holes, to fix the point light source unit to the cover. The first combining member may have a height substantially the same as a thickness of the first surface of the cover when the first combining member is the protrusion, and the second combining member may have a height substantially the same as a thickness of the plate when the second combining member is the protrusion.

The first and second combining members may be adjacent to the FPC. The first and second combining members may be formed at central portions of the fixing plate and the first surface, respectively. The first and second combining members may be uniformly formed over the fixing plate and the first surface, respectively.

The holes may have a circular shape, and the protrusions may have a hemispherical shape, so that the holes may be combined with the protrusions, respectively. The holes may have a polygonal shape, and the protrusions may have a polygonal cylindrical shape, so that the holes may be combined with the protrusions, respectively. Each of the protrusions may have an L-shape, so that the protrusions may be slidably combined with the holes through a sliding combination, respectively.

The fixing plate and the cover may include a metal, and for example, the fixing plate and the cover may include aluminum.

According to an embodiment of the present invention, a display apparatus includes a light-guide plate, a point light source unit, a fixing plate, a cover and a display panel. The point light source unit includes at least one point light source disposed at a side of the light-guide plate to emit light, a flexible printed circuit board (FPC) disposed under the light-guide plate and having the point light source mounted on the FPC, and a reflective sheet disposed between the light-guide plate and the FPC to reflect the light exiting from the light-guide plate. The fixing plate is disposed under the FPC and has a plurality of holes spaced apart from each other. The cover is disposed under the fixing plate and having a first surface on which a plurality of protrusions is formed. Each of the protrusions corresponds to each of the holes. The display panel is disposed over the light-guide plate to display an image.

The protrusions may be respectively inserted into the holes, to fix the point light source unit to the cover. The point light source unit may be disposed between the reflective sheet and the FPC to reflect the light, and may further include a reflective tape filling a gap between the reflective sheet and the FPC. The cover may further include a second surface extending from the first surface to fix a side surface of the point light source, and a third surface extending from the second surface to fix an upper portion of the light-guide plate.

In a method for manufacturing a backlight assembly according to an embodiment of the present invention, at least one point light source emitting light is mounted on a flexible printed circuit board (FPC). A reflective sheet is disposed over the FPC. A fixing .plate, through which a plurality of holes spaced apart from each other is formed, is disposed under the FPC. A cover including a first surface, on which a plurality of protrusions is formed, is disposed under the fixing plate. Each of the protrusions corresponds to each of the holes. The fixing plate is fixed to the first surface of the cover, by inserting the protrusions into the holes, respectively. In addition, a second surface extending from the first surface may be disposed at a side of the point light source. A light-guide plate may be disposed over the reflective sheet, at the side of the point light source and under a third surface extending from the second surface. The holes and protrusions may be formed via a pressing process.

According to embodiments of the present invention, the fixing plate and the first surface of the cover are directly combined with each other, so that the manufacturing time for assembling the backlight assembly may be decreased to enhance the efficiency of an assembly process.

In addition, heat generated from the light source may be easily transmitted to the cover having metal, so that the heat may be efficiently dissipated. An adhesive tape used for combining the fixing plate with the first surface of the cover is omitted, so that manufacturing costs may be decreased.

### BRIEF DESCRIPTION OF THE DRAWINGS

Embodiments of the present invention can be understood in more detail from the following description taken in conjunction with the accompanying drawings, in which:
FIG. 1 is an exploded perspective view illustrating a backlight assembly excluding a cover according to an example embodiment of the present invention;
FIG. 2 is a perspective view illustrating a cover for a backlight assembly according to an example embodiment of the present invention;
FIG. 3 is a cross-sectional view taken along a line I-I' in FIGS. 1 and 2;
FIG. 4 is an exploded perspective view illustrating a fixing plate and a cover according to an example embodiment of the present invention;
FIG. 5 is an exploded perspective view illustrating a fixing plate and a cover according to an example embodiment of the present invention;
FIG. 6 is an exploded perspective view illustrating a fixing plate and a cover according to an example embodiment of the present invention; and
FIG. 7 is an exploded perspective view illustrating a fixing plate and a cover according to an example embodiment of the present invention.

### DESCRIPTION OF THE EMBODIMENTS

The invention is described more fully hereinafter with reference to the accompanying drawings, in which embodiments of the invention are shown. This invention may, however, be embodied in many different forms and should not be construed as limited to the embodiments set forth herein. In the drawings, the size and relative sizes of layers and regions may be exaggerated for clarity.

It will be understood that when an element or layer is referred to as being "on," "connected to" or "coupled to" another element or layer, it can be directly on, connected or coupled to the other element or layer or intervening elements or layers may be present. Like numbers may refer to like elements throughout.

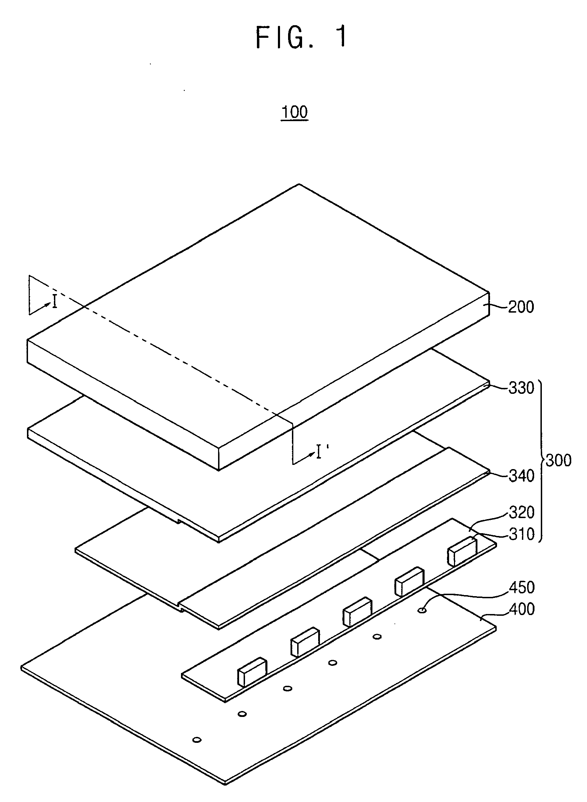

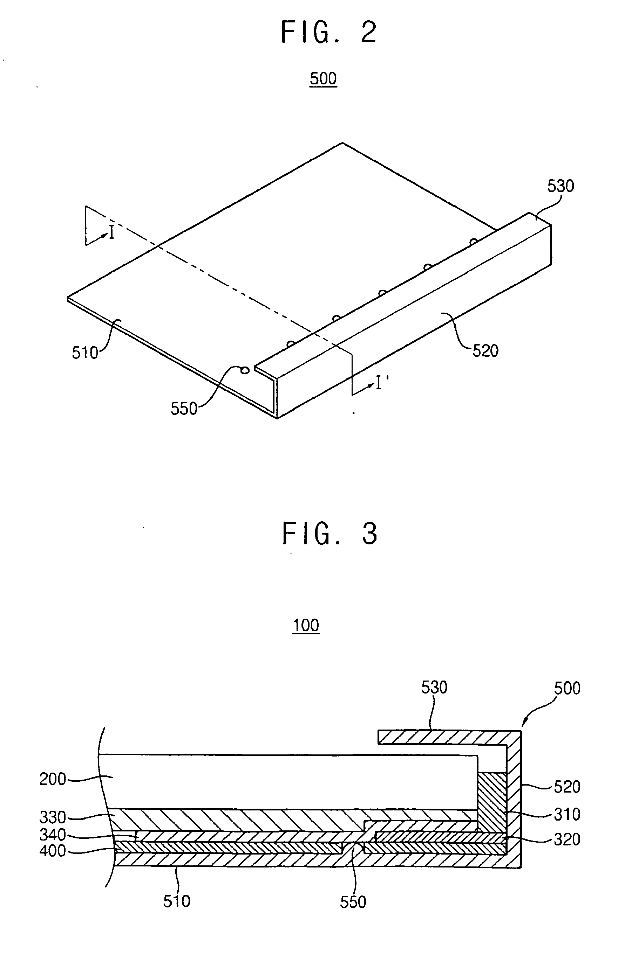

FIG. 1 is an exploded perspective view illustrating a backlight assembly 100 excluding a cover according to an example embodiment of the present invention. FIG. 2 is a perspective view illustrating a cover of a backlight assembly according to the example embodiment of the present invention. FIG. 3 is a cross-sectional view taken along a line I-I' in FIGS. 1 and 2.

Referring to FIGS. 1, 2 and 3, the backlight assembly 100 according to the present example embodiment includes a light-guide plate 200, a point light source unit 300, a fixing plate 400 and a cover 500. The cover 500 is illustrated in FIG. 2.

The light-guide plate 200 includes an incident surface and an emitting surface, and has a rectangular plate shape with a predetermined thickness. A point light source 310 is disposed adjacent the incident surface of the light-guide plate 200. The light-guide plate 200 emits light from the emitting surface so that the light-guide plate 200 guides the light to a display panel (not shown). Prior to emission, the light is incident into the light-guide plate 200 through the incident surface of the light-guide plate 200 from the point light source 310. The incident surface of the light-guide plate 200 according to the present example embodiment may be substantially perpendicular to the emitting surface.

The light-guide plate 200 may include a reflective surface connected to the incident surface and opposite to the emitting surface. A reflective sheet 330 may be disposed under the reflective surface of the light-guide plate 200. The light incident into the light-guide plate 200 from the point light source 310 may be partially guided toward the emitting surface, and partially guided toward the reflective surface. The light-guided toward the reflective surface is reflected again into the light-guide plate 200 by the reflective sheet 330, and then the light exits from the emitting surface toward the display panel. Alternatively, the reflective surface of the light-guide plate 200 may include a reflective pattern reflecting the light, and thus the reflective sheet 300 may be omitted.

The light-guide plate 200 may include a transparent material, to minimize loss of the light. For example, the light-guide plate 200 may include polymethyl methacrylate (PMMA) having good strength. Alternatively, the light-guide plate 200 may include polycarbonate (PC) to decrease the thickness of the light-guide plate 200. Polycarbonate has less strength than polymethyl methacrylate (PMMA), but has good heat resistance.

Although not shown in the figure, optical sheets may be disposed over the light-guide plate 200, to enhance optical characteristics of the light emitted from the light-guide plate 200. The optical sheets may include, for example, a diffusion sheet diffusing the light, a prism sheet condensing the light, and a reflective polarizing sheet recycling the light.

The point light source unit 300 includes a plurality of point light sources 310 and a flexible printed circuit board (FPC) 320, and may further include the reflective sheet 330 and a reflective tape 340. As mentioned above, the reflective sheet 330 and the reflective tape 340 may be omitted according to a configuration of the light-guide plate 200.

The point light sources 310 according to the present example embodiment are disposed adjacent the incident surface of the light-guide plate 200. In addition, the point light sources 310 are mounted on an edge of the FPC 320, to be electrically connected to the FPC 320. The point light sources 310 are lit up based on a control signal of the FPC 320, to emit the light. The point light source 310 may include a light-emitting diode (LED) emitting white light. The number of the point light sources 310 depends on the size of the display panel and the required brightness level of the display panel.

The FPC 320 is disposed under the light-guide plate 200. For example, when the backlight assembly 100 includes the reflective sheet 330, the FPC 320 may be disposed under the reflective sheet 330 and extended to partially overlap the reflective sheet 330. The reflective tape 340 may be used to attach the reflective sheet 330 to the FPC 320. Alternatively, when the reflective sheet 330 is omitted, the FPC 320 may be extended to partially overlap the reflective surface of the light-guide plate 200.

The point light sources 310 are mounted on the FPC 320, and the FPC 320 controls the operation of the point light sources 310.

The reflective sheet 330 is disposed under the reflective surface of the light-guide plate 200, to cover the reflective surface of the light-guide plate 200. For example, the reflective sheet 330 may be attached to a lower surface of the light-guide plate 200. As mentioned above, when the reflective surface of the light-guide plate 200 has a predetermined reflective pattern, the reflective sheet 330 may be omitted.

The reflective sheet 330 reflects the light leaking outside through the reflective surface of the light-guide plate 200, to the inside of the light-guide plate 200, to enhance light efficiency. The reflective sheet 330 includes a material having high light reflectivity. For example, the reflective sheet 330 may include a silver-based material, polyethylene terephthalate (PET) having white color, or polycarbonate (PC).

The reflective tape 340 is disposed between the reflective sheet 330 and the FPC 320, to partially cover the reflective sheet 330 and the FPC 320. For example, the reflective tape 340 may be partially attached to a lower surface of the reflective sheet 330 and to an upper surface of the FPC 320.

The reflective tape 340 fills a gap between the reflective sheet 330 and the FPC 320, and fixes the FPC 320 to the reflective sheet 330. In addition, the reflective tape 340 further reflects the light leaking under the reflective sheet 330 to the inside of the light-guide plate 200, to enhance the light efficiency.

The fixing plate 400 is disposed under the FPC 320. For example, the fixing plate 400 may be partially disposed under the FPC 320, to fix and support the FPC 320. In addition, the fixing plate 400 is partially disposed under the reflective tape 340, to fix and support the reflective tape 340. Thus, the fixing plate 400 prevents the point light source unit 300 from being distorted or deformed, when the light-guide plate 200 is combined with the point light source unit 300.

The fixing plate 400 includes a metal. For example, the fixing plate 400 may include aluminum (AI). Thus, when the point light source 310 is lit up, the heat generated from the light-guide plate 200 and the point light source unit 300 may be easily dissipated through the fixing plate 400.

At least one first combining member 450 is formed on the fixing plate 400. At least one first combining member 450 may be, for example, fixing hole or fixing protrusion. When at least one first combining member 450 is the fixing hole, at least one second combining member 550 further described below may be the fixing protrusion. Alternatively, when at least one first combining member 450 is the fixing protrusion, at least one second combining member 550 may be the fixing hole. In addition, some of the first combining members 450 and some of the second combining members 550 may be the fixing holes, or some of the first combining members 450 and some of the second combining members 550 may be the fixing protrusions.

The case in which at least one first combining member 450 is the fixing hole and at least one second combining member 550 is the fixing protrusion, will be explained as an example embodiment of the present invention.

Referring again to FIGS. 1, 2 and 3, each of the fixing holes 450 has a circular shape, and each of the fixing protrusions 550 has a hemispherical shape, but the shapes of the fixing holes and protrusions are not limited thereto. Various example embodiments of the fixing holes 450 and the fixing protrusions 550 are explained below.

The fixing protrusions 550 are respectively inserted into the fixing holes 450, to fix the point light source unit 300 to the cover 500. Thus, when the light-guide plate 200 is combined with the point light source unit 300, the light-guide plate 200 and the point light source unit 300 may be prevented from being distorted and deformed, and the backlight assembly 100 may be protected from external impacts. In addition, since the fixing plate 400 is directly combined with the cover 500, the heat transmitted to the fixing plate 400 is transmitted to the cover 500, so that the heat generated from the light-guide plate 200 and the point light source unit 300 may be easily dissipated.

The cover 500 includes a first surface 510, a second surface 520 and a third surface 530.

The first surface 510 is disposed under the fixing plate 400, to fix and support the point light source unit 300. For example, at least one second combining member 550 may be formed on the first surface 510. When at least one second combining member 550 is the fixing protrusion, at least one fixing protrusion 550 is inserted into the fixing hole 450 of the fixing plate 400. In this case, each of the fixing protrusions 550 preferably has a height substantially same as a thickness of the fixing plate 400. When the fixing protrusion 550 is protruded more than the thickness of the fixing plate 400, the fixing protrusion 550 makes contact with the reflective tape 340 or the reflective sheet 330, so that the light may be scattered. When at least one first combining member is the fixing protrusion, at least one fixing protrusions preferably has a height substantially same as a thickness of the first surface 510.

The second surface 520 extends from the first surface 510. The second surface 520 is substantially perpendicular to the first surface 510. The second surface 520 is disposed at a side of the point light source, to fix and support the point light source 310. Although not shown in the figure, the second surface 520 includes a combining member, to be combined with the point light source 310 and the FPC 320. Thus, the point light source unit 300 including the point light source 310 may be prevented from being distorted or deformed.

Accordingly, the first surface 510 is combined with the fixing plate 400, so that movement of the point light source unit 300 along a longitudinal direction may be restricted. Furthermore, the second surface 520 is combined with the point light source 310 and the FPC 320, so that movement of the point light source unit 300 along a direction substantially perpendicular to the longitudinal direction may be restricted.

The third surface 530 extends from the second surface 520. The third surface 530 is substantially perpendicular to the second surface 520, and is substantially parallel with the first surface 510. The third surface 530 is disposed over the light-guide plate 200 and the point light source 310, to prevent the light-guide plate 200 and the point light source 310 from being separated. As illustrated in FIG. 3, a space is formed between the light-guide plate 200 and the third surface 530, and optical sheets (not shown) may be disposed in the space. Alternatively, the light-guide plate 200 may be attached to the third surface 530.

The first surface 510 is disposed under the point light source unit 300 to entirely cover the point light source unit 300, and the third surface 530 is disposed over the light-guide plate 200 to partially cover the light-guide plate 200. Thus, the light-guide plate 200 sufficiently provides the light to the display panel.

The first, second and third surfaces 510, 520 and 530 may be separately manufactured and then may be assembled together, to form the cover 500. Alternatively, the first, second and third surfaces 510, 520 and 530 are integrally formed via a molding process. Thus, the strength and durability of the cover 500 may be enhanced. Since the cover 500 is directly combined with the fixing plate 400, the cover 500 and the fixing plate 400 may include substantially the same material. For example, the cover 500 may include aluminum (Al). Thus, the heat generated from the point light source unit 300 may be easily transmitted and easily dissipated, and the fixing plate may be strongly fixed and supported by the cover 500.

The backlight assembly 100 illustrated in FIGS. 1, 2 and 3, includes the point light sources 310 and the FPC 320 formed at one side of the light-guide plate 200. Alternatively, the backlight assembly 100 may include the point light sources 310 and the FPC 320 formed at more than one side, such as opposite sides of the light-guide plate 200.

Although not shown in the figure, the display apparatus according the present example embodiment includes the display panel disposed over the backlight assembly 100. For example, the display panel may be disposed over the third surface 530 of the cover 500. The display panel includes a first substrate, a second substrate opposite to the first substrate, and a liquid crystal layer disposed between the first and second substrates. The display panel receives the light from the backlight assembly 100, and changes an arrangement direction of liquid crystal molecules in the liquid crystal layer, to display the image.

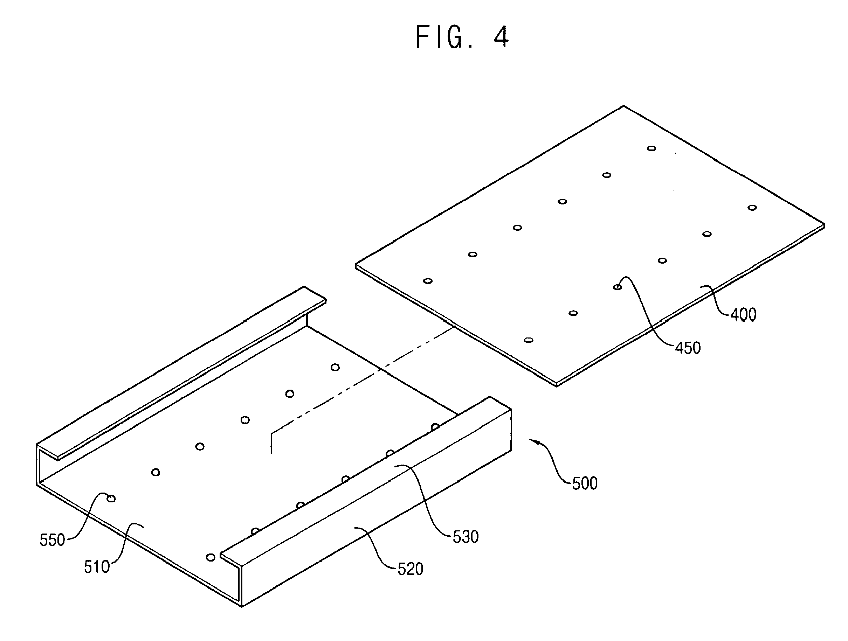

FIG. 4 is an exploded perspective view illustrating a fixing plate and a cover according to an example embodiment of the present invention. Particularly, the backlight assembly 100 according to the embodiment in FIG. 4 is substantially the same as the embodiment illustrated in FIGS. 1, 2 and 3, at least except with respect to the fixing plate 400, the cover 500 and the combination between the fixing plate 400 and the cover 500 of the backlight assembly 100.

Referring to FIG. 4, the plurality of fixing holes 450 is formed through the fixing plate 400, and the plurality of fixing protrusions 550 is formed on the first surface 510 of the cover 500.

Each of the fixing holes 450 corresponds to each of the fixing protrusions 550. The fixing protrusions 550 are respectively inserted into the fixing holes 450, to fix the fixing plate 400 to the cover 500. The fixing protrusions 550 may be tightly inserted into the fixing holes 450 such that each protrusion is fixed by a friction fit in each respective hole.

The fixing holes 450 and the fixing protrusions 550 according to the present example embodiment are adjacent the FPC 320. The fixing holes and protrusions 450 and 550 are respectively arranged in two lines and adjacent to the FPC 320, as illustrated in FIG. 4. The fixing holes and protrusions 450 and 550 may be respectively arranged in more than two lines and adjacent the FPC 320. Alternatively, the fixing holes and protrusions 450 and 550 may be irregularly arranged adjacent the FPC 320. When the fixing holes and protrusions 450 and 550 are formed adjacent the FPC 320, the cover 500 and the point light source unit 300 may be easily combined.

When the number of the fixing holes and protrusions 450 and 550 increases, the rate of heat dissipation may decrease. The number of the fixing holes and protrusions 450 and 550 may be determined based on the size of the display panel.

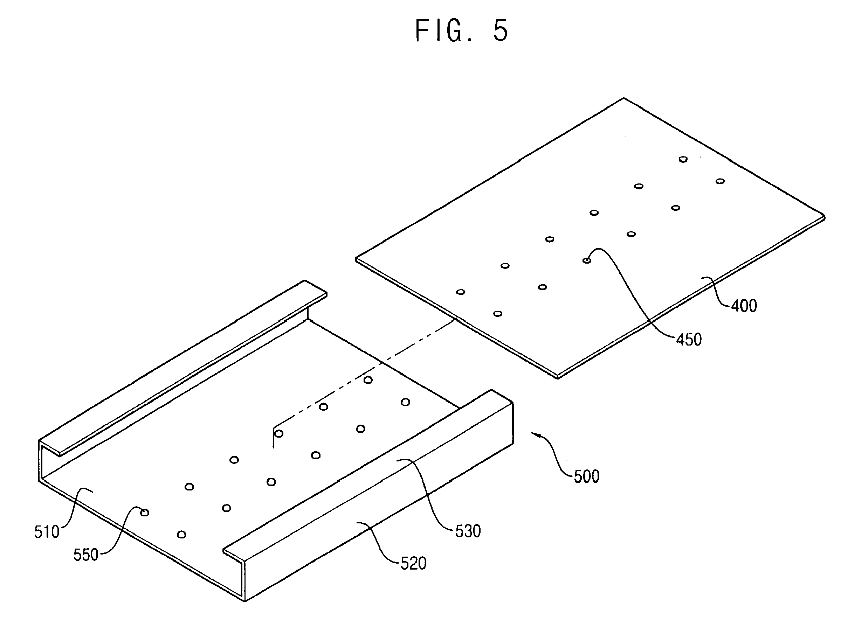

FIG. 5 is an exploded perspective view illustrating a fixing plate and a cover according to an example embodiment of the present invention. The backlight assembly 100 according to the present example embodiment is substantially the same as the example embodiments illustrated in FIGS. 1 to 4, at least except with respect to a position where the fixing holes and protrusions 450 and 550 are formed.

The fixing holes 450 and the fixing protrusions 550 according to the present example embodiment are formed at a central portion of the fixing plate 400 and the first surface 510. The fixing holes and protrusions 450 and 550 are respectively arranged in two lines and at the central portion of the fixing plate 400 and the first surface 510, as illustrated in FIG. 5. Alternatively, the fixing holes and protrusions 450 and 550 may be respectively arranged in more than two lines and at the central portion of the fixing plate 400 and the first surface 510. Alternatively, the fixing holes and protrusions 450 and 550 may be irregularly arranged at the central portion of the fixing plate 400 and the first surface 510. When the fixing holes and protrusions 450 and 550 are formed at the central portion of the fixing plate 400 and the first surface 510, the cover 500 and the point light source unit 300 may be strongly combined.

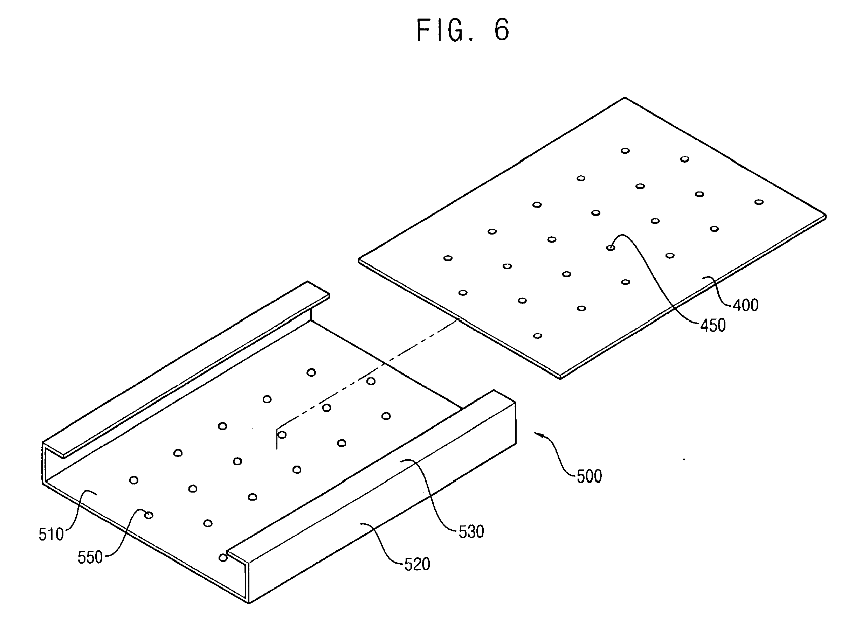

FIG. 6 is an exploded perspective view illustrating a fixing plate and a cover according to an example embodiment of the present invention. The backlight assembly 100 according to the present example embodiment is substantially the same as the previous example embodiments illustrated in FIGS. 1 to 4, at least except with respect to a position where the fixing holes and protrusions 450 and 550 are formed.

The fixing holes 450 and the fixing protrusions 550 according to the present example embodiment are uniformly formed at the fixing plate 400 and the first surface 510, respectively. The fixing holes and protrusions 450 and 550 that are uniformly arranged at the fixing plate 400 and the first surface 510 at a predetermined distance from each other and the sides of the fixing plate 400 and cover 500, are illustrated in FIG. 6. The fixing holes and protrusions 450 and 550 may be irregularly arranged at the fixing plate 400 and the first surface 510. When the fixing holes and protrusions 450 and 550 are uniformly formed at the fixing plate 400 and the first surface 510, the cover 500 and the point light source unit 300 may be combined to have a uniform strength overall.

The fixing holes 450 illustrated in FIGS. 4, 5 and 6 have a substantially circular shape, and the fixing protrusions 550 have a substantially hemispherical shape. Alternatively, the fixing hole 450 may have a substantially polygonal shape, such as a triangular shape, a rectangular shape and so on, and the fixing protrusions 550 may have a substantially cylindrical shape, such as a triangular cylindrical shape, a rectangular cylindrical shape and so on. For example, the fixing holes 450 and the fixing protrusions 550 may have the shapes combined with each other to maintain a fixed strength. For example, the fixing holes and protrusions 450 and 550 may have simple shapes, so that the fixing holes and protrusions 450 and 550 may be easily manufactured.

The fixing holes and protrusions 450 and 550 may be formed via a press molding process. For example, after the fixing plate 400 is manufactured, the fixing plate 400 is pressed via the press molding process to form the fixing holes 450 through the fixing plate 400. After the cover 500 is manufactured, the first surface of the cover 500 is pressed via the press molding process to form the fixing protrusions 550 on the cover 500.

Alternatively, the fixing holes and protrusions 450 and 550 may be formed at substantially the same time with the fixing plate 400 and the cover 500, via die and molds for the fixing plate and the cover having holes and protrusions.

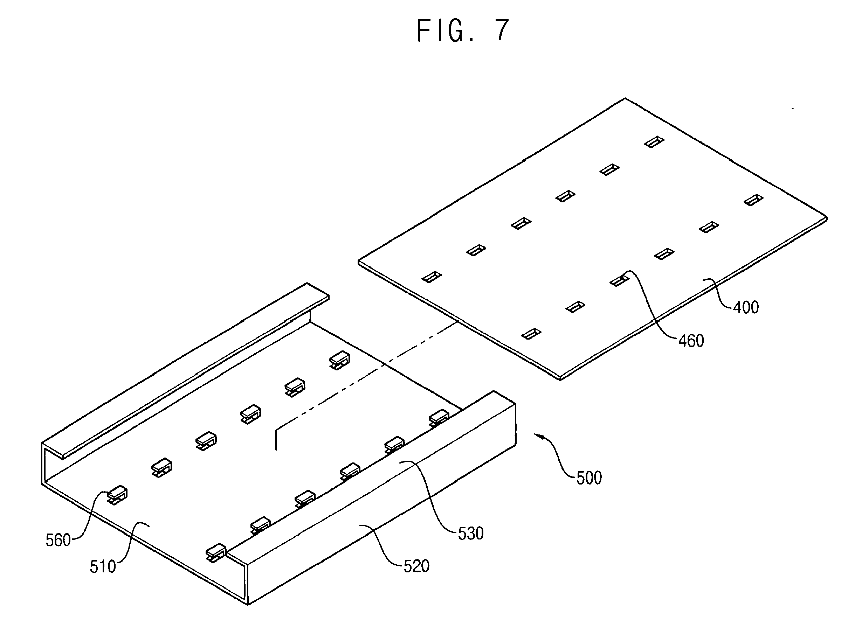

FIG. 7 is an exploded perspective view illustrating a fixing plate and a cover according to an example embodiment of the present invention.

Referring to FIG. 7, a plurality of fixing holes 460 is formed through the fixing plate 400, and a plurality of fixing protrusions 560 is formed on the first surface 510 of the cover 500. Each of the fixing protrusions 560 has a hook shape. For example, the hook shape may be an L-shape.

Each of the fixing holes 460 corresponds to each of the fixing protrusions 560, to fix the fixing plate 400 to the cover 500. For example, the fixing protrusions 560 may be respectively inserted into the fixing holes 460, and then a hook portion of each of the fixing protrusions 560 may slide on an upper surface of the fixing plate 400 to be combined with each of the fixing holes 460. In the present example embodiment, the fixing protrusions 560 are combined with the fixing holes 460 with the hook portion, so that the point light source unit 300 may be fixed and supported more stably.

The fixing holes and protrusions 460 and 560 according to the present example embodiment are formed adjacent the FPC 320. Alternatively, the fixing holes and protrusions 460 and 560 may be formed at a central portion of the fixing plate 400 and the first surface 510 as in the example embodiment described in connection with Fig. 5. In addition, the fixing hole and protrusions 460 and 560 may be uniformly formed at the fixing plate 400 and the first surface 510 as in the embodiment described in connection with Fig. 6.

According to the embodiments of the present invention, the fixing plate and the first surface of the cover are directly combined with each other, so that the manufacturing time for assembling the backlight assembly may be decreased to enhance the reliability of an assembly process.

In addition, heat generated from the light source may be more easily transmitted to the cover having metal, so that the heat may be efficiently dissipated. An adhesive tape used for combining the fixing plate with the first surface of the cover is omitted, so that manufacturing costs may be decreased.

Having described the example embodiments of the present invention, it is noted that various changes, substitutions and alterations can be made herein without departing from the spirit and scope of the invention as defined by the appended claims.

## Claims

1. A backlight assembly comprising:
a light-guide plate;
a point light source unit including at least one point light source disposed at a side of the light-guide plate to emit light, and a flexible printed circuit board (FPC) disposed under the light-guide plate and having the point light source mounted on the FPC;
a fixing plate disposed under the FPC and having at least one first combining member; and
a cover disposed under the fixing plate and having a first surface on which at least one second combining member is formed, the second combining member being combined with the first combining member.

2. A backlight assembly of claim 1, wherein the fixing plate has a plurality of the first combining members spaced apart from each other; and
the cover has the first surface on which a plurality of the second combining members is formed, the second combining members being respectively combined with the first combining members.

3. The backlight assembly of claim 2, wherein the first combining members are protrusions when the corresponding second combining members are holes, and the first combining members are holes when the corresponding second combining members are protrusions.

4. The backlight assembly of claim 3, wherein the protrusions are respectively inserted into the holes.

5. The backlight assembly of claim 4, wherein the first combining member has a height substantially the same as a thickness of the first surface of the cover when the first combining member is a protrusion, and the second combining member has a height substantially the same as a thickness of the fixing plate when the second combining member is the protrusion.

6. The backlight assembly of claim 4, wherein the first and second combining members are adjacent to the FPC.

7. The backlight assembly of claim 4, wherein the first and second combining members are formed at central portions of the fixing plate and the first surface, respectively.

8. The backlight assembly of claim 4, wherein the first and second combining members are uniformly formed at the fixing plate and the first surface, respectively.

9. The backlight assembly of claim 4, wherein the holes have a circular shape, and the protrusions have a hemispherical shape.

10. The backlight assembly of claim 4, wherein the holes have a polygonal shape, and the protrusions have a polygonal cylindrical shape.

11. The backlight assembly of claim 4, wherein each of the protrusions has an L-shape.

12. The backlight assembly of claim 11, wherein the protrusions are slidably combined with the holes.

13. The backlight assembly of claim 2, wherein the fixing plate and the cover comprise a metal.

14. The backlight assembly of claim 13, wherein the fixing plate and the cover comprise aluminum (Al).

15. A display apparatus comprising:
a light-guide plate;
a point light source unit including at least one point light source disposed at a side of the light-guide plate to emit light, a flexible printed circuit board (FPC) disposed under the light-guide plate and having the point light source mounted on the FPC, and a reflective sheet disposed between the light-guide plate and the FPC;
a fixing plate disposed under the FPC and having a plurality of holes spaced apart from each other;
a cover disposed under the fixing plate and having a first surface on which a plurality of protrusions is formed, each of the protrusions corresponding to each of the holes, respectively; and
a display panel disposed over the light-guide plate.

16. The display apparatus of claim 15, wherein the protrusions are respectively inserted into the holes.

17. The display apparatus of claim 16, wherein the point light source unit is disposed between the reflective sheet and the FPC, and further comprises a reflective tape filling a gap between the reflective sheet and the FPC.

18. The display apparatus of claim 17, wherein the cover further comprises a second surface extending from the first surface substantially parallel to a side surface of the point light source, and a third surface extending from the second surface substantially parallel to an upper portion of the light-guide plate.

19. A method for manufacturing a backlight assembly, the method comprising:
mounting at least one point light source emitting light on a flexible printed circuit board (FPC);
disposing a reflective sheet over the FPC;
disposing a fixing plate under the FPC, wherein the fixing plate includes a plurality of holes spaced apart from each other;
disposing a cover under the fixing plate, wherein the cover includes a first surface on which a plurality of protrusions is formed, each of the protrusions corresponding to each of the holes, respectively; and
fixing the fixing plate to the first surface of the cover by inserting the protrusions into the holes, respectively.

20. The method of claim 19, further comprising:
disposing a second surface of the cover extending from the first surface at a side of the point light source; and
disposing a light-guide plate over the reflective sheet, at the side of the point light source and under a third surface of the cover extending from the second surface.

21. The method of claim 19, wherein the holes and protrusions are formed via a pressing process.
